# EUROPÄISCHE PATENTSCHRIFT

(11) **EP 2 981 447 B1**
(45) Veröffentlichungstag und Bekanntmachung des Hinweises auf die Patenterteilung: **20.11.2019**
(21) Anmeldenummer: 14702189.3
(22) Anmeldetag: 27.01.2014
(51) Int. Cl.: B62D 1/185, B62D 1/16

(54) **VERFAHREN ZUR HERSTELLUNG EINER LENKSPINDELLAGEREINHEIT**
METHOD FOR PRODUCING A STEERING SHAFT BEARING UNIT
PROCÉDÉ DE FABRICATION D'UN BLOC PALIER D'ARBRE DE DIRECTION

(30) Priorität: 03.04.2013 DE 102013103328
(43) Veröffentlichungstag der Anmeldung: 10.02.2016
(73) Patentinhaber: ThyssenKrupp Presta AG, 9492 Eschen (LI); thyssenkrupp AG, 45143 Essen (DE)
(72) Erfinder: NICOLUSSI, Matthias, 6800 Feldkirch (AT); SCHNITZER, Hieronymus, 9487 Gambrin (LI); GOGOS, Odisseas, 9450 Altstätten (CH); PLESCHKE, Benjamin, 9468 Sax (CH); KURZ, Hannes, 6800 Feldkirch (AT)
(74) Vertreter: thyssenkrupp Intellectual Property GmbH
(86) Internationale Anmeldenummer: PCT/EP2014/000206
(87) Internationale Veröffentlichungsnummer: WO 2014/161617

(56) Entgegenhaltungen:
- EP-A1- 2 572 961
- DE-B3-102010 037 312
- JP-A- 2011 046 310
- US-A1- 2005 262 960

## Beschreibung

Die vorliegende Erfindung betrifft ein Verfahren zur Herstellung einer Lenkspindellagereinheit zur drehbaren Lagerung einer durch die Lenkspindellagereinheit hindurchgeführten Lenkspindel eines Kraftfahrzeugs um eine Längsachse, wobei die Lenkspindellagereinheit ein erstes Mantelteil und zumindest ein zweites Mantelteil aufweist und das zweite Mantelteil, in zumindest einem Schiebelager des ersten Mantelteils geführt, entlang der Längsachse verschiebbar im ersten Mantelteil gelagert ist.

Weiters betrifft die Erfindung auch eine Lenkspindellagereinheit zur drehbaren Lagerung einer durch die Lenkspindellagereinheit hindurch geführten Lenkspindel eines Kraftfahrzeugs und eine Lenksäule für ein Kraftfahrzeug mit einer solchen Lenkspindellagereinheit.

Lenkspindellagereinheiten zur drehbaren Lagerung einer durch die Lenkspindellagereinheit hindurchgeführten Lenkspindel eines Kraftfahrzeuges um eine Längsachse sind beim Stand der Technik bekannt. Um die Lenkspindellagereinheit zur Anpassung der Position des Lenkrades an den Fahrzeuglenker in Längsrichtung, also entlang der Längsachse, verstellen zu können, aber auch um eine Verkürzung der Lenkspindellagereinheit im Falle eines Fahrzeug-Crashes möglich zu machen, sind Lenkspindellagereinheiten bekannt, welche ein erstes Mantelteil und zumindest ein zweites Mantelteil aufweisen, wobei das zweite Mantelteil in zumindest einem Schiebelager des ersten Mantelteils geführt, entlang der Längsachse des ersten Mantelteils verschiebbar ist.

Bei der verschiebbaren Lagerung des zweiten Mantelteils im ersten Mantelteil müssen die für diese Lagerung zuständigen Schiebelager unterschiedliche Anforderungen erfüllen. Einerseits soll zum Anpassen der Position des Lenkrades an die individuellen Anforderungen des Kraftfahrzeuglenkers möglichst wenig Kraft notwendig sein, um das erste und das zweite Mantelteil relativ zueinander zu verschieben. Andererseits soll durch die Schiebelager aber auch eine spielfreie Lagerung erreicht und damit ein Klappern, verursacht durch die beiden Mantelteile, vermieden werden. Vor allem müssen die Schiebelagerteile aber auch dafür sorgen, dass es bei einem Fahrzeug-Crash nicht zum Verkanten oder sonstige, auf die Lenksäule einwirkende Kraftspitzen beim Ineinanderschieben der beiden Mantelteile kommen kann.

Im Stand der Technik sind aus der EP 2 572 961 A1 oder der DE 2010 037312 B3 Lenksäulen bekannt, bei denen zum Vermeiden von Klappern das zweite Mantelteil in dem ersten Mantelteil mittels elastischer Vorspanneinrichtungen belastet wird. Nachteilig daran ist jedoch die Reduzierung der Steifigkeit der Lenksäule, durch die unerwünschte Vibrationen und Resonanzen auftreten können, die das Betriebsverhalten beeinträchtigen.

Um diese Anforderungen erfüllen zu können, schlägt die Erfindung ein Verfahren zur Herstellung einer Lenkspindellagereinheit gemäß Anspruch 1 sowie eine Lenkspindellagereinheit gemäß Anspruch 6 und eine Lenksäule gemäß Anspruch 10 vor.

Beim erfindungsgemäßen Verfahren ist somit vorgesehen, dass das Schiebelager zumindest zwei Schiebelagerteile aufweist und beim Zusammenbau der Lenkspindellagereinheit in einem ersten Verfahrensschritt das zweite Mantelteil zwischen die Schiebelagerteile eingebracht wird, anschließend in einem zweiten Verfahrensschritt die Schiebelagerteile in einer Relativbewegung aufeinander zu an das zweite Mantelteil angedrückt werden und daran anschließend in einem dritten Verfahrensschritt die Schiebelagerteile in der mit der Relativbewegung erreichten Stellung im ersten Mantelteil fixiert werden.

Durch das aufeinander zu Bewegen der Schiebelagerteile in einer Relativbewegung und das Andrücken dieser Schiebelagerteile an das zweite Mantelteil im zweiten Verfahrensschritt können sehr exakt die gewünschten Reibungskräfte zwischen den Lagerflächen der Schiebelagerteile und den korrespondierenden Lagerflächen des zweiten Mantelteils eingestellt werden, sodass sich in Summe eine definierte Verschiebekraft bereitstellen lässt. Durch die Fixierung der Schiebelagerteile im ersten Mantelteil während des dritten Verfahrensschrittes wird die mit der Relativbewegung im zweiten Verfahrensschritt erreichte Stellung fixiert, womit auch gleichbleibende bzw. konstante Reibungs- und damit auch Verschiebekräfte dauerhaft festgelegt sind. Die Fixierung im ersten Mantelteil kann durch an sich bekannte Schweißprozesse wie Laserschweißen, Widerstandsschweißen, Lichtbogenschweißen, Schutzgasschweißen etc. aber auch durch Nieten, Taumeln, Durchsetzfügen (Toxen), Verschrauben mit Fixierung durch Verstemmen u. dgl. erreicht werden. Wichtig ist es dabei, dass die Fixierung dauerhaft erfolgt und im Betrieb nicht lösbar oder nachstellbar ist. Der Vollständigkeit halber sei darauf hingewiesen, dass eines bzw. einzelne der Schiebelagerteile auch schon vor dem dritten Verfahrensschritt im ersten Mantelteil fixiert sein bzw. werden können. Um die Relativbewegung der Schiebelagerteile aufeinander zu im zweiten Verfahrensschritt zu realisieren, können aber müssen also nicht zwingend alle Schiebelagerteile bewegt werden. Es kann auch die Bewegung nur eines Schiebelagerteils ausreichen, um diese Relativbewegung und damit das Andrücken an das zweite Mantelteil zu realisieren. Im dritten Verfahrensschritt geht es dann darum, dass alle oder eben nur die restlichen Schiebelagerteile im ersten Mantelteil fixiert werden, sodass zumindest am Ende des dritten Verfahrensschrittes alle als ein Schiebelager zur Lagerung des zweiten Mantelteils miteinander zusammenwirkenden Schiebelagerteile in ihrer mit der Relativbewegung erreichten Stellung im ersten Mantelteil fixiert sind.

Die Schiebelagerteile können teilschalenartig z. B. in Form von Zylindermantelabschnitten aber auch mehr oder weniger abschnittsweise ringförmig oder z.B. auch streifenförmig oder punktförmig ausgebildet sein. Bei den Schiebelagerteilen handelt es sich günstigerweise um im Wesentlichen in sich starre Körper, welche bevorzugt frei von Federzungen u. dgl. sind. Günstigerweise sind die Schiebelagerteile massive Körper ohne Hohlräume, welche lediglich eine gewisse materialbedingte Elastizität aufweisen. Eine formbedingte Elastizität z. B. wie bei Federzungen u. dgl. wird bei den Schiebelagerteilen günstigerweise vermieden. Die Anzahl und Form der Schiebelagerteile kann unterschiedlich gewählt werden. Das gleiche gilt für das verwendete Material. Hier kommen vor allem Schiebelager bzw. Lagerflächen der Schiebelager und des zweiten Mantelteils aus Metall, Kunststoff aber auch Keramik in Frage. Im Sinne einer einfachen kostengünstigen Ausgestaltungsform handelt es sich beim Schiebelager günstigerweise um ein reines Gleitlager. Bevorzugt werden die Schiebelagerteile im dritten Verfahrensschritt unbeweglich am ersten Mantelteil fixiert. Dies kann durch eine starre Verbindung zwischen Schiebelagerteil und erstem Mantelteil und/oder auch durch die Ausbildung des Schiebelagerteils als im Wesentlichen starrer Körper realisiert werden.

Der Vollständigkeit halber wird noch darauf hingewiesen, dass vor dem ersten Verfahrensschritt und nach dem dritten Verfahrensschritt auch noch weitere Verfahrensschritte zur Herstellung der Lenkspindellagereinheit bei erfindungsgemäßen Verfahren realisiert werden können. Darüber hinaus ist auch darauf hinzuweisen, dass der erste, zweite und dritte Verfahrensschritt nicht unbedingt direkt aufeinander folgen müssen. Es können, soweit dies günstig ist, zwischen dem ersten, zweiten und dritten Verfahrens auch andere Verfahrensschritte zusätzlich realisiert werden.

Die Längsachse der Lenkspindellagereinheit ist einerseits die Achse, um die sich die bei der fertigen Lenksäule in der Lenkspindellagereinheit drehbar gelagerte Lenkspindel beim Drehen des Lenkrades dreht. Andererseits ist die Längsachse der Lenkspindellagereinheit auch diejenige Achse entlang der das erste und das zweite Mantelteil relativ zueinander verschoben werden können.

Bei der Umsetzung des erfindungsgemäßen Verfahrens sehen bevorzugte Varianten eine Regelung im zweiten Verfahrensschritt vor, mit der die gewünschten Verschiebekräfte eingestellt werden können. Eine erste Variante sieht dabei vor, dass während des zweiten Verfahrensschrittes eine Verschiebekraft bestimmt wird, welche benötigt wird, um das zweite Mantelteil entlang der Längsachse im ersten Mantelteil zu verschieben. Hier wird die Verschiebekraft also direkt als Regelparameter verwendet. Solche Regelungen können aber auch mit Ersatzparametern durchgeführt werden. So kann vorgesehen sein, dass während des zweiten Verfahrensschrittes ein Weg bestimmt wird, welcher bei der Relativbewegung der Schiebelagerteile aufeinander zu zurückgelegt wird. Genauso gut ist es möglich, dass während des zweiten Verfahrensschrittes eine Kraft bestimmt wird, mit der zumindest eines der Schiebelagerteile bei der Relativbewegung zwischen den Schiebelagerteilen an das Mantelteil angedrückt wird. Bei der genannten Regelung im zweiten Verfahrensschritt kann nur die Regelung über die Verschiebekraft oder nur die Regelung über einen der genannten Ersatzparameter erfolgen. Es ist aber genauso gut möglich, mehr als einen der genannten Regelparameter für diese Regelungen heranzuziehen. So kann z. B. vorgesehen sein, dass über eine Weg- bzw. Kraftregelung, also mit Hilfe zumindest eines der genannten Ersatzparameter eine Grobjustierung und dann mit der Verschiebekraft als Regelparameter anschließend eine Feinjustierung der Verschiebekraft erfolgt. Bei all diesen Varianten ist dann anschließend günstigerweise vorgesehen, dass der dritte Verfahrensschritt in derjenigen Stellung durchgeführt wird, bei der die Verschiebekraft und/oder der Weg und/oder die Kraft einen vorgegebenen Wert erreicht hat bzw. haben oder in einem vorgegebenen Wertebereich liegt bzw. liegen. Die letztendlich eingestellte Verschiebekraft, welche notwendig ist, um die Mantelteile entläng der Längsachse relativ zueinander zu verschieben, liegt günstigerweise zwischen 100 Newton und 600 Newton. Diese Werte werden günstiger auch aus der Ruhelage beim Beginn der Verschiebebewegung eingehalten.

Bei bevorzugten Varianten erfindungsgemäßer Lenkspindellagereinheiten ist vorgesehen, dass das erste Mantelteil zumindest einen ersten Abschnitt und zumindest einen zweiten Abschnitt aufweist und eines der Schiebelagerteile Bestandteil des ersten Abschnitts ist oder in diesem befestigt oder zumindest abgestützt ist und dass zumindest ein anderes der Schiebelagerteile Bestandteil des zweiten Abschnitts ist oder an diesem befestigt oder zumindest abgestützt ist. Bei der Herstellung solcher Lenkspindellagereinheiten ist dann bevorzugt vorgesehen, dass die Abschnitte des ersten Mantelteils im zweiten Verfahrensschritt zum Andrücken der Schiebelagerteile an das zweite Mantelteil in einer Relativbewegung aufeinander zu bewegt werden und die Abschnitte im dritten Verfahrensschritt zur Fixierung der Schiebelagerteile in der mit der Relativbewegung erreichten Stellung aneinander fixiert werden. In anderen Worten ist bei diesen Varianten somit vorgesehen, dass die Schiebelagerteile jeweils in einer der genannten Arten und Weisen an einem der Abschnitte des ersten Mantelteils angeordnet sind und zur Realisierung der Relativbewegung der Schiebelagerteile aufeinander zu diese Abschnitte des Mantelteils im zweiten Verfahrensschritt mitsamt den an ihn angeordneten Schiebelagerteilen aufeinander zu bewegt und an das zweite Mantelteil angedrückt werden. Die Fixierung der Schiebelagerteile im dritten Verfahrensschritt erfolgt dann über die Fixierung der Abschnitte in der erreichten Stellungen aneinander.

Auch wenn dies eine bevorzugte Ausgestaltungsform der Erfindung ist, so sei darauf hingewiesen, dass es hierzu auch erfindungsgemäße Alternativen gibt. Es ist nicht zwingend vorgesehen, dass die Schiebelagerteile einzeln oder in ihrer Gesamtheit im zweiten Verfahrensschritt immer nur zusammen mit entsprechenden Abschnitten des ersten Mantelteils bewegt werden. Es kann auch vorgesehen sein, dass zumindest eines der Schiebelagerteile im zweiten Verfahrensschritt, vorzugsweise in einer entsprechenden Führung des ersten Mantelteils, im ersten Mantelteil alleine so weit auf das andere Schiebelagerteil zubewegt und an das zweite Mantelteil angedrückt wird bis die gewünschte Stellung bzw. Verschiebekraft erreicht wird. Das Schiebelagerteil oder auch die Schiebelagerteile können in diesen Ausgestaltungsformen dann im dritten Verfahrensschritt direkt an den entsprechenden Stellen im ersten Mantelteil fixiert werden.

Eine erfindungsgemäße Lenkspindellagereinheit zur drehbaren Lagerung einer durch die Lenkspindellagereinheit hindurchgeführten Lenkspindel eines Kraftfahrzeugs um eine Längsachse weist ein erstes Mantelteil und zumindest ein zweites Mantelteil auf, wobei das zweite Mantelteil, in zumindest einem Schiebelager des ersten Mantelteils geführt, entlang der Längsachse verschiebbar im ersten Mantelteil gelagert ist. Hierbei ist erfindungsgemäß vorgesehen, dass das Schiebelager zumindest zwei Schiebelagerteile aufweist und das zweite Mantelteil zwischen den Schiebelagerteilen verschiebbar gelagert ist und die Schiebelagerteile im ersten Mantelteil fixiert sind. Bei der fertiggestellten Lenkspindellagereinheit sind die Schiebelagerteile somit im ersten Mantelteil fixiert. Günstigerweise ist dabei, also bei der fertiggestellten Lenksäule vorgesehen, dass das zweite Mantelteil mit einer entlang der Längsachse wirkenden Verschiebekraft mit einem Betrag zwischen 100 Newton und 600 Newton relativ zum ersten Mantelteil verschiebbar ist. Diese Verschiebekräfte werden günstigerweise auch am Beginn des Verschiebens der beiden Mantelteile relativ zueinander, also aus der Ruhelage heraus, realisiert. Durch Verschiebekräfte in diesem Wertebereich wird einerseits bei der Längsverstellung des Lenkrades eine Verschiebung der Mantelteile relativ zueinander mit einem relativ geringen Kraftaufwand sichergestellt. Andererseits ergibt sich aber, insbesondere bei diesen Verschiebekräften, auch eine spielfreie Führung des zweiten Mantelteils im ersten Mantelteil, sodass es zu keinem Klappern kommt. Darüber hinaus ist aber auch kein Verkanten oder sonstiges Hängenbleiben der beiden Mantelteile bei einer Relativverschiebung im Crash-Fall zu befürchten.

Die erfindungsgemäße Lenksäule kann mit dem erfindungsgemäßen Verfahren hergestellt werden, sodass das für das Verfahren gesagte, soweit anwendbar, auch für die Lenksäule gilt und umgekehrt.

Wie oben bereits angedeutet, ist bei einer Lenkspindellagereinheit gemäß der Erfindung günstigerweise vorgesehen, dass das erste Mantelteil zumindest einen ersten Abschnitt und zumindest einen zweiten Abschnitt aufweist und eines der Schiebelagerteile Bestandteil des ersten Abschnitts ist oder an diesem befestigt oder zumindest abgestützt ist und das zumindest eine andere der Schiebelagerteile Bestandteil des zweiten Abschnitts ist oder an diesem befestigt oder zumindest abgestützt ist, wobei die Abschnitte zur Fixierung der Schiebelagerteile aneinander fixiert sind. Hingewiesen wird aber auch auf die bereits oben genannte Alternative, bei der zumindest eines der Schiebelagerteil eben nicht an einem solchen Abschnitt sondern direkt im ersten Mantelteil befestigt wird.

In bevorzugten Ausgestaltungsformen der erfindungsgemäßen Lenkspindellagereinheit ist vorgesehen, dass das erste Mantelteil als eine Art Führungskasten, vorzugsweise als Blechbiegeteil, ausgeführt ist. Beim zweiten Mantelteil handelt es sich günstigerweise um ein Führungsrohr. Dies kann einen kreisrunden Querschnitt aber auch davon abweichende, z.B. eckige Querschnitte aufweisen, da das zweite Mantelteil ja nicht verdrehbar sondern nur verschiebbar im ersten Mantelteil gelagert ist.

In der Ausgestaltungsform mit den beiden, im zweiten Verfahrensschritt aufeinander zu bewegbaren Abschnitten ist günstigerweise vorgesehen, dass der erste Abschnitt des ersten Mantelteils ein zumindest bereichsweise wannenförmig geformtes Blechteil ist und der zweite Abschnitt des ersten Mantelteils ein zwischen Seitenwände des ersten Abschnitts fixiertes bzw. fixierbares Deckblech ist.

Zur drehbaren Lagerung der Lenkspindel in der Lenkspindellagereinheit ist günstigerweise vorgesehen, dass zumindest eines der Mantelteile, vorzugsweise das erste Mantelteil, zumindest ein Drehlager zur drehbaren Lagerung der Lenkspindel aufweist. Es sind auch Ausgestaltungsformen der Erfindung denkbar, bei denen nur das erste Mantelteil oder nur das zweite Mantelteil oder auch beide Mantelteile entsprechende Drehlager für die Lenkspindel aufweisen. In der Betriebsstellung der fertig eingebauten Lenksäule weist das erste Mantelteil günstigerweise in Richtung Lenkrad und das zweite Mantelteil günstigerweise in Richtung der zu lenkenden Räder des Kraftfahrzeugs.

Eine erfindungsgemäße Lenksäule für ein Kraftfahrzeug weist eine erfindungsgemäße Lenkspindellagereinheit auf, wobei eine Lenkspindel der Lenksäule durch die Mantelteile hindurchgeführt und um die Längsachse drehbar in der Lenkspindellagereinheit gelagert ist.

Bei erfindungsgemäßen Lenksäulen handelt es sich günstigerweise um sogenannte verstellbare Lenksäulen. Bei diesen ist die Lenkspindel zusammen mit der Lenkspindellagereinheit in vertikaler Richtung also in der Höhe und/oder in Längsrichtung, also entlang der Längsachse verstellbar. Bei der Längsverstellung ist günstigerweise vorgesehen, das die Mantelteile der Lenkspindellagereinheit relativ zueinander bewegt bzw. teleskopiert werden. Erfindungsgemäße Lenksäulen weisen günstigerweise eine Trageinheit auf. Diese wird an der Karosserie des Kraftfahrzeugs befestigt und trägt die Lenkspindellagereinheit samt Lenkspindel. Die Trageinheit kann ein- oder mehrteilig ausgeführt sein. Erfindungsgemäße Lenksäulen weisen weiters günstigerweise eine Energieabsorptionseinheit auf, welche dem Energieabbau im Crash-Fall, also im Falle einer Fahrzeugkollision dient. Diese Energieabsorptionseinheit kann zwischen relativ zueinander bewegbaren Teilen der Trageinheit aber auch zwischen Trageinheit und Lenkspindellagereinheit angeordnet sein bzw. wirken.

Die Trageinheit kann in bevorzugten Ausgestaltungsformen insbesondere zwei Seitenwangen aufweisen, zwischen denen die Lenkspindellagereinheit, insbesondere deren erstes Mantelteil, gehalten ist. Natürlich kann die Lenkspindellagereinheit bzw. insbesondere das erste Mantelteil auch in anderer Form an der Trageinheit gehalten sein. Zur verstellbaren Befestigung der Lenkspindellagereinheit an der Trageinheit ist günstigerweise vorgesehen, dass eines der Mantelteile, vorzugsweise das erste Mantelteil, eine oder mehrere Traglaschen aufweist, welche wiederum vorzugsweise jeweils ein Loch oder ein Langloch aufweisen. Durch dieses Loch bzw. Langloch kann ein Spannbolzen einer an sich bekannten Feststelleinrichtung der Lenksäule hindurchgeführt sein.

In bevorzugten Ausgestaltungsformen erfindungsgemäßer Lenkspindellagereinheiten bzw. Lenksäulen ist vorgesehen, dass das zweite Mantelteil fixiert oder an einer, insbesondere karosseriefesten, Schwenkachse befestigt ist. Eine besonders bevorzugte Ausgestaltungsform der erfindungsgemäßen Lenksäule weist eine Lenkunterstützungseinheit auf. Günstigerweise ist an dieser das zweite Mantelteil befestigt bzw. fixiert. Die Lenkunterstützungseinheit kann, wie an sich bekannt, der Über- und/oder Untersetzung des Lenkwinkels und/oder der Lenkkraftunterstützung dienen.

Natürlich können erfindungsgemäße Lenkspindellagereinheiten bzw. Lenksäulen auch ohne eine solche Lenkunterstützungseinheit realisiert werden.

Weitere Merkmale und Einzelheiten einer bevorzugten Ausgestaltungsform der Erfindung werden nachfolgend anhand eines erfindungsgemäßen Ausführungsbeispiels erläutert. Es zeigen:
- Fig. 1 und 2: perspektivische Ansichten auf eine erfindungsgemäße Lenksäule;
- Fig. 3: einen Längsschnitt durch die Lenksäule gemäß den Fig. 1 und 2;
- Fig. 4 bis 8: Darstellungen zur Veranschaulichung des erfindungsgemäßen Verfahrens zur Herstellung der Lenkspindellagereinheit einer solchen Lenksäule;
- Fig. 9: die Lenkspindellagereinheit der vorhergehenden Fig. in einer Explosionsdarstellung;
- Fig. 10: das erste Mantelteil dieser Lenkspindellagereinheit und
- Fig. 11: eine teilweise geschnittene Darstellung in Form eines Vertikalschnitts durch die in Fig. 1 bis 3 dargestellte Lenksäule im Bereich des Spannbolzens der Feststelleinrichtung.

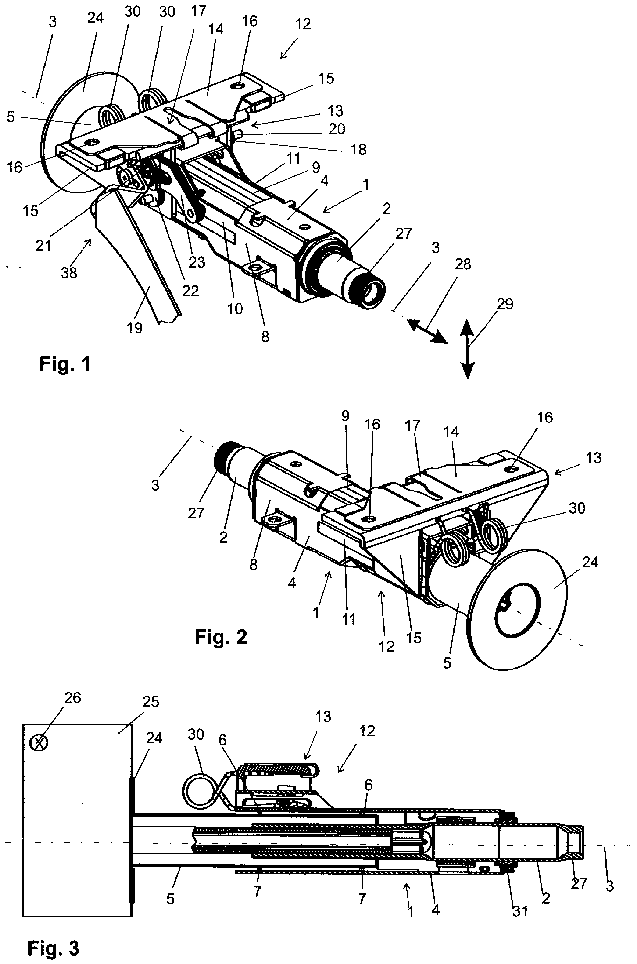

Die Fig. 1 und 2 zeigen perspektivische Darstellungen der erfindungsgemäßen Lenksäule 12. Bei diesen Darstellungen ist allerdings die bei diesem Ausführungsbeispiel vorgesehene Lenkunterstützungseinheit 25 nicht dargestellt. Diese ist schematisiert in Fig. 3 gezeigt. Bei dem hier dargestellten erfindungsgemäßen Ausführungsbeispiel der Lenksäule 12 handelt es sich um eine sowohl in Längsrichtung 28 als auch in Höhenrichtung 29 verstellbare Lenksäule. Sie weist eine erfindungsgemäße Lenkspindellagereinheit 1 sowie eine Trageinheit 13 auf. Die Trageinheit 13 dient der Befestigung der Lenksäule 12 in der Karosserie des Kraftfahrzeugs. Im gezeigten Ausführungsbeispiel ist die Trageinheit 13 mehrteilig aufgebaut. Sie weist ein erstes Trageinheitteil 14 mit den Befestigungslaschen 16 auf. Mit den Befestigungslaschen 16 wird die Lenksäule 12 an der Karosserie des Fahrzeugs befestigt. Ein zweites Trageinheitteil 15 weist in diesem Ausführungsbeispiel zwei Seitenwangen 18 auf, zwischen denen die Lenkspindellagereinheit 1 angeordnet ist. Im Crash-Fall sind das erste Trageinheitteil 14 und das zweite Trageinheitteil 15 relativ zueinander verschiebbar. Zwischen ihnen ist eine Energieabsorptionseinheit 17, in diesem Ausführungsbeispiel in Form einer Biegelasche, angeordnet. Bei einer Crash-bedingten Relativbewegung zwischen den Trageinheitteilen 14 und 15 kommt es zu einer Deformation der Energieabsorptionseinheit, wie dies an sich bekannt ist, und damit zur definierten Energieaufzehrung. Dies ist an sich bekannt und muss nicht weiter erläutert werden. Es sei lediglich darauf hingewiesen, dass die Ausgestaltung der Trageinheit 13 und der Energieabsorptionseinheit 17 natürlich auch anders ausgeführt sein kann.

Die erfindungsgemäße Lenkspindellagereinheit 1 weist ein erstes Mantelteil 4 und ein zweites Mantelteil 5 auf. Das hier realisierte Schiebelager zur Realisierung der Verschiebbarkeit des ersten und zweiten Mantelteils 4 und 5 relativ zueinander entlang der Längsachse 3 wird weiter unten im Detail geschildert. Das erste Mantelteil 4 ist in diesem Ausführungsbeispiel in Form eines Führungskastens aus entsprechend umgeformten Blechteilen ausgebildet, das zweite Mantelteil 5 als Mantelrohr. In der Lenkspindellagereinheit 1 ist die Lenkspindel 2 um die Längsachse 3 drehbar gelagert. Die Lenkspindel 2 weist den Lenkradanschluss 27 zur Befestigung des hier nicht dargestellten Lenkrades auf. Im hier gezeigten Ausführungsbeispiel erfolgt die drehbare Lagerung der Lenkspindel 2 einerseits durch die im ersten Mantelteil 4 angeordneten Drehlager 31, wie sie besonders gut im Schnitt gemäß Fig. 3 zu sehen sind. Im gezeigten Ausführungsbeispiel ist die Lenkspindel 2 andererseits aber auch in der hier nur schematisiert dargestellten Lenkunterstützungseinheit 25 gelagert. Der Vollständigkeit halber wird darauf hingewiesen, dass eine entsprechende Drehlagerung der Lenkspindel 2 mittels eines Drehlager grundsätzlich natürlich auch im zweiten Mantelteil 5 erfolgen kann. Die Lenkspindel 2 ist im hier gezeigten Ausführungsbeispiel, wie in Fig. 3 gut sichtbar, ebenfalls teleskopierbar und damit mehrteilig aufgebaut.

Die Lenkspindellagereinheit 1 ist im gezeigten Ausführungsbeispiel mit ihrem ersten Mantelteil 4 zwischen den Seitenwangen 18 der Trageinheit 13 bzw. des zweiten Trageinheitteils 15 angeordnet. Über eine an sich bekannte Feststelleinrichtung 38 kann die Fixierung der Lenkspindellagereinheit 1 samt Lenkspindel 3 an der Trageinheit 13 zur Verstellung in Längsrichtung 28 und/oder Höhenrichtung 29 gelöst werden. Im Normalbetrieb des Kraftfahrzeugs, also vor allem beim Fahren des Kraftfahrzeugs befindet sich die Feststelleinrichtung 38 hingegen üblicherweise in ihrer Schließstellung, in der sie die Lenkspindellagereinheit 1 in ihrer Position an der Trageinheit 13 festhält.

Wie an sich bekannt, weist die hier realisierte Feststelleinrichtung 38 einen Stellhebel 19 und einen Spannbolzen 20 sowie eine Nocken-Nockenfolger-Anordnung 21 auf. Darüber hinaus umfasst sie auch die Lamellenpakete 22 und 23. Der Stellhebel 19 ist zur Verstellung der Feststelleinrichtung 38 zwischen ihrer geöffneten Stellung, in der eine Höhenverstellung in Längs- und/oder Höhenrichtung 28, 29 möglich ist, und in ihrer Schließstellung, in der die Lenkspindellagereinheit 1 in ihrer Position relativ zur Trageinheit 13 arretiert ist, um eine Längsachse des Spannbolzens 20 verschwenkbar. Die Nocken-Nockenfolger-Anordnung 21 sorgt, wie an sich bekannt, bei dieser Verstellbewegung des Stellhebels für einen Hub in Längsrichtung des Spannbolzens 20. Dieser Hub verstellt die Feststelleinrichtung 38 zwischen ihrer geöffneten Stellung und ihrer Schließstellung, wobei in der Schließstellung die Seitenwangen 18 so fest gegen die Lenkspindellagereinheit 1 gedrückt werden, dass diese in ihrer Position arretiert ist und in der geöffneten Stellung der Feststelleinrichtung dieser Reibschluss so weit beseitigt ist, dass eine Verstellung der Lenkspindellagereinheit 1 in den Richtungen 28 und/oder 29 möglich ist. Zur Erhöhung der Klemmkräfte in der geschlossenen Stellung der Feststelleinrichtung 38 weist das hier gezeigte Ausführungsbeispiel, wie an sich bekannt, die zwei ineinander greifenden Lamellenpakete 22 und 23 auf, wobei das Lamellenpaket 22 an der Trageinheit 13 bzw. am zweiten Trageinheitteil 15 und das Lamellenpaket 23 an der Lenkspindellagereinheit 1 fixiert ist.

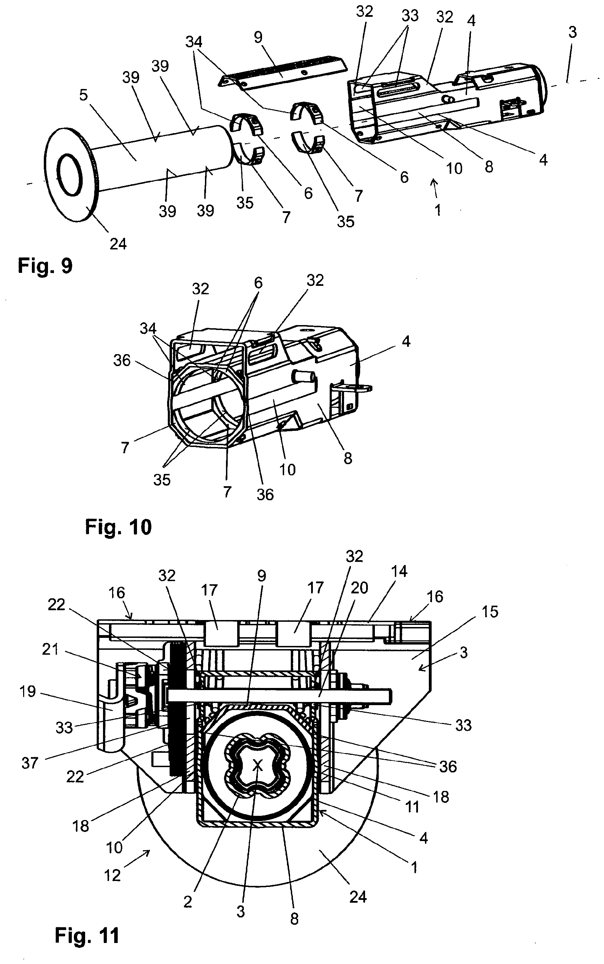

Der Spannbolzen 20 durchdringt im gezeigten Ausführungsbeispiel im Wesentlichen vertikal verlaufende Langlöcher 37 in den Seitenwangen 18 und in Richtung parallel zur Längsachse 3 verlaufende Langlöcher 33 in den Traglaschen 32 des ersten Mantelteils 4 der Lenkspindellagereinheit 1. Dies ist besonders gut in der teilweise geschnittenen und in Form eines Vertikalschnittes ausgebildeten Darstellung gemäß Fig. 11 zu sehen. Zur Höhenverstellung wird die Lenkspindellagereinheit 1 samt Lenkspindel 2 und Feststelleinrichtung 38 bzw. Spannbolzen 20 in zumindest einer vertikalen Richtung 29 entlang der Langlöcher 37 in den Seitenwangen 18 verschoben. Zur Längsverstellung in den Längsrichtungen 28 wird das erste Mantelteil 4 relativ zum Spannbolzen 20 und der Trageinheit 13 und damit auch den Seitenwangen 18 verschoben. Dabei erfolgt eine Verschiebung der Langlöcher 33 der Traglaschen 32 des ersten Mantelteils 4 auf dem Spannbolzen 20.

Um bei geöffneter Feststelleinrichtung 38 ein Herabfallen der Lenkspindellagereinheit 1 samt Lenkspindel 2 zu vermeiden sind, wie an sich beim Stand der Technik bekannt, die Vorspannfedern 30 vorgesehen.

Im gezeigten Ausführungsbeispiel ist das zweite Mantelteil 5 über den Flansch 24 an der Lenkunterstützungseinheit 25 fixiert. Zur Realisierung der Höhenverstellung in Höhenrichtungen 29 ist in diesem Ausführungsbeispiel eine Schwenkachse 26 vorhanden, mit der die Lenkunterstützungseinheit 25 samt der, über den Flansch 24 daran angebrachten Lenkspindellagereinheit 1 relativ zur Trageinheit 13 verschwenkt werden kann.

Der Vollständigkeit halber wird darauf hingewiesen, dass dies natürlich nur eines von vielen möglichen Ausführungsbeispielen einer erfindungsgemäßen Lenksäule 12 bzw. Lenkspindellagereinheit 1 ist. Es kann sich grundsätzlich bei erfindungsgemäßen Lenksäulen 12 auch um nur in Längsrichtung 28 oder nur in Höhenrichtung 29 verstellbare Lenksäulen oder sogar um gar nicht verstellbare Lenksäulen handeln. Erfindungsgemäße Lenksäulen müssen auch nicht zwangsläufig eine Lenkunterstützungseinheit 25 aufweisen. Bei Ausführungsvarianten ohne Lenkunterstützungseinheit 25 kann bei einer höhenverstellbaren Ausgestaltungsform das zweite Mantelteil 5 auch direkt an einer entsprechenden Schwenkachse 26 befestigt sein. Bei nicht höhenverstellbaren Lenksäulen 12 kann sogar eine karosseriefeste Fixierung des zweiten Mantelteils 5 vorgesehen sein.

Der Aufbau des erfindungsgemäßen Ausführungsbeispiels einer Lenkspindellagereinheit 1 der hier gezeigten Lenksäule 12 wird nachfolgend insbesondere anhand von Fig. 9 erläutert.

Fig. 9 zeigt eine Explosionsdarstellung, in der hier relevante Teile der Lenkspindellagereinheit 1 gut zu sehen sind. Das erste Mantelteil 4 ist in diesem Ausführungsbeispiel zweiteilig aufgebaut. Es weist den ersten Abschnitt 8 auf, welcher hier in Form eines zumindest bereichsweise wannenförmig geformten Blechteils ausgeführt ist. Weiters umfasst das erste Mantelteil 4 auch den zweiten Abschnitt 9, welcher in Form eines Deckbleches ausgebildet ist und, wie nachfolgend noch erläutert, im Zuge des Zusammenbaus bzw. der Herstellung der Lenkspindellagereinheit zwischen den Seitenwänden 10 und 11 des ersten Abschnitts 8 fixiert wird. Am ersten Mantelteil 4 befinden sich weiters die Traglaschen 32, welche das bereits geschilderte Langloch 33 aufweisen, welches zur Befestigung der Lenkspindellagereinheit 1 an der Trageinheit 13 vom Spannbolzen 20 durchdrungen wird. Das zweite Mantelteil 5 ist hier in Form eines Mantelrohres ausgebildet, an dem der Flansch 24 befestigt bzw. einstückig angeordnet ist.

Im gezeigten Ausführungsbeispiel sind zwei in Richtung der Längsachse 3 hintereinander angeordnete Schiebelager vorgesehen, welche jeweils aus einem Schiebelagerteil 6 und einem Schiebelagerteil 7 bestehen. Es handelt sich im gezeigten Ausführungsbeispiel bei den Schiebelagern um Gleitlager. Die Schiebelagerteile 6 und 7 liegen mit ihren Lagerflächen 34 und 35 im gezeigten Ausführungsbeispiel an den Lagerflächen 39 des zweiten Mantelteils 5 an. Bei der gezeigten Ausführungsform sind die Schiebelagerteile 6 und 7 zunächst als abschnittsweise ringförmig ausgeformte Einzelteile gefertigt. Es kann sich sowohl um Kunststoff- als auch um Metallteile oder sogar auch um Keramikteile handeln. Die Schiebelagerteile 7 werden bei der gezeigten Ausführungsform über eine Verschraubung oder ein Vernieten aber auch ein Verkleben oder Anschweißen o. dgl. im ersten Abschnitt 8 des ersten Mantelteils 4 fixiert. Die Schiebelagerteile 6 werden über entsprechende Befestigungsmaßnahmen am, das Deckblech bildenden zweiten Abschnitt 9 des ersten Mantelteils 4 fixiert. Es wird darauf hingewiesen, dass die einzelnen, gemeinsam ein Schiebelager bildenden Schiebelagerteile 6 und 7 in ihrer Anzahl, in ihrer Ausgestaltungsform und der Art der Befestigung und Anordnung auch in zahlreichen anderen Ausgestaltungsformen realisiert werden können. So ist es durchaus denkbar, die entsprechenden Schiebelagerteile 6 und 7 direkt einstückig an den entsprechenden Abschnitten 8 und 9 des ersten Mantelteils 4 auszuführen. Es ist auch denkbar, dass es sich um eine reine Abstützung der Schiebelagerteile im ersten Mantelteil 4 handelt. Als Materialien für die Schiebelagerteile 6 und 7 kommen z.B. Kunststoff, Metall und Keramik in Frage. Die Form kann abweichend von den hier dargestellten Ausgestaltungsformen sein. Es kann sich um streifenförmige Schiebelagerteile um abschnittsweise zylindermantelförmige Schiebelagerteile u. dgl. handeln. Es muss sich auch nicht unbedingt um jeweils zwei Schiebelagerteile 6 und 7 handeln, welche zusammen ein Schiebelager bilden. Günstig ist jedenfalls die Ausführungsform als reines Gleitlager. Bei den Schiebelagerteilen handelt es sich weiters günstigerweise, wie eingangs ausgeführt, um im Wesentlichen starre Körper, also nicht um Federn, wie Blattfedern oder dergleichen.

Der Vollständigkeit halber sei auch darauf hingewiesen, dass natürlich beim ersten wie auch beim zweiten Mantelteil 4, 5 andere Querschnittsformen realisiert werden können, als dies hier im Ausführungsbeispiel gezeigt ist.

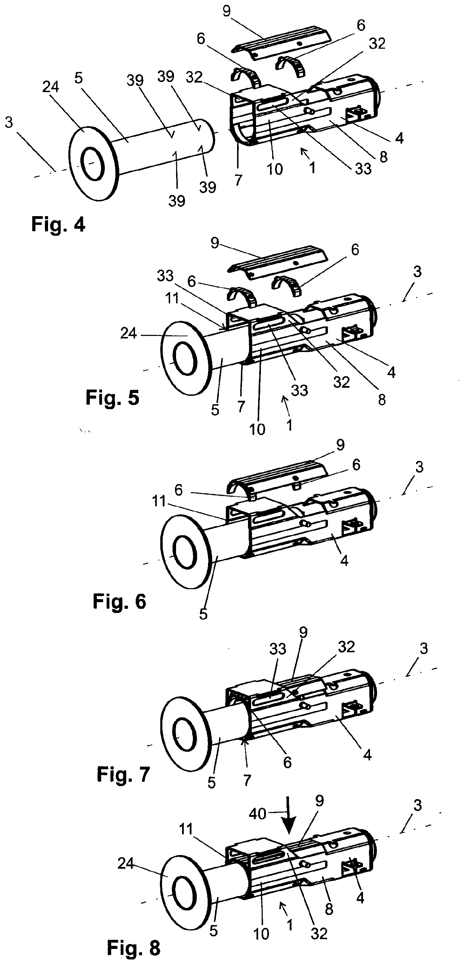

Das erfindungsgemäße Verfahren zur Herstellung der Lenkspindellagereinheit 1 wird nachfolgend anhand der Fig. 4 bis 8 noch einmal erläutert.

In Fig. 5 sind die Schiebelagerteile 7 bereits im ersten Abschnitt 8 des ersten Mantelteils 4 fixiert. Es wird nun im ersten Verfahrensschritt das zweite Mantelteil zwischen die Schiebelagerteile 6 und 7 eingebracht, wie dies in einzelnen Schritten anhand der Fig. 4 bis 7 dargestellt ist. Anschließend erfolgt im zweiten Verfahrensschritt die Relativbewegung der Schiebelagerteil 6 und 7 aufeinander zu und damit das Andrücken der Schiebelagerteile 6 und 7 an das zweite Mantelteil 5. Konkret gesprochen, werden die Lagerflächen 34 und 35 der Schiebelagerteile 6 und 7 an die Lagerflächen 39 des zweiten Mantelteils 5 angedrückt. Im gezeigten Ausführungsbeispiel erfolgt dieses Andrücken und die Relativbewegung, indem die Schiebelagerteile 6 gemeinsam mit dem Deckblech in Form des zweiten Abschnitts 9 von oben kommend also in Richtung 40 gegen das bereits in die unteren Schiebelagerteile 7 und damit in den ersten Abschnitt 8 eingelegte zweite Mantelteil 5 gedrückt werden. In diesem zweiten Verfahrensschritt erfolgt, wie eingangs geschildert, günstigerweise eine Regelung dieses Andrückvorgangs bzw. dieser Relativbewegung der Schiebelagerteile 6 und 7 zueinander in Abhängigkeit der Verschiebekraft und/oder des Weges, welcher bei der Relativbewegung der Schiebelagerteile 6 und 7 aufeinander zu zurückgelegt wird und/oder der Kraft mit welcher die Schiebelagerteile 6 und 7oder zumindest eines der Schiebelagerteile 6 bzw. 7 an das Mantelteil 5 angedrückt wird. Wie eingangs erläutert, können diese Regelparameter einzeln oder in Kombination dazu herangezogen werden, dass letztendlich die Schiebelagerteile 6 und 7 mit dem dazwischenliegenden zweiten Mantelteil 5 so weit zueinander zu bewegt und an das zweite Mantelteil 5 angedrückt werden, dass die gewünschte Verschiebekraft realisiert wird. Bei der Verschiebekraft handelt es sich, wie eingangs erläutert, um die Kraft, die notwendig ist, um die Mantelteile 4 und 5 in Richtung der Längsachse 3 relativ zueinander zu verschieben. Liegt die Verschiebekraft im gewünschten Wertebereich, so werden die Schiebelagerteile 6 und 7 in der mit ihrer Relativbewegung erreichten Stellung im dritten Verfahrensschritt im ersten Mantelteil 4 fixiert. Im hier gezeigten Ausführungsbeispiel erfolgt dies über eine Fixierung des zweiten Abschnitts 9 bzw. des Deckblechs im ersten Abschnitt 8 des ersten Mantelteils 4. Diese Fixierung kann, wie eingangs erläutert, durch verschiedene, an sich bekannte Schweißverfahren aber auch durch Verschraubungen, Vernieten, Taumeln, Toxen u. dgl. hergestellt werden. In Fig. 10, in der nur das erste Mantelteil 4 dargestellt ist, sind die Fixierungsstellen 36 zwischen dem zweiten Abschnitt 9 und ersten Abschnitt 8 des ersten Mantelteils 4 angezeichnet.

Abweichend von der anhand der Fig. 4 bis 10 geschilderten Variante kann auch vorgesehen sein, dass die Schiebelagerteile 6 im zweiten Verfahrensschritt nicht am Abschnitt 9 angebracht sind und ohne diesen an das zweite Mantelteil 5 angedrückt und dann im dritten Verfahrensschritt z. B. an den Seitenwänden 10 und 11 des ersten Mantelteils 4 fixiert werden. Hierzu können z. B. entsprechende Aussparungen in dem ersten Mantelteil 4 vorgesehen sein, durch die die Schiebelagerteile 6 zur Ausführung der Relativbewegung im zweiten Verfahrensschritt und zum Andrücken an das zweite Mantelteil 5 in das erste Mantelteil 4 eingeschoben werden können. Zur Führung der Schiebelagerteile 6 können auch entsprechende Führungen in die Seitenwände 10 und 11 des ersten Mantelteils 4 eingearbeitet sein.

Unabhängig davon, welche Ausgestaltungsform der Erfindung realisiert wird, ist es durch die Erfindung möglich, definierte Verschiebekräfte zwischen den beiden Mantelteilen 4 und 5 zu realisieren, welche dauerhaft eine spielfreie Führung des zweiten Mantelteils 5 im ersten Mantelteil 4 sicherstellen und vor allem auch im Crash-Fall verhindern, dass durch das Zusammenschieben der beiden Mantelteile 4 und 5 nicht einkalkulierte unerwartete Krafteinwirkungen auf das Gesamtsystem entstehen. Dies stellt sicher, dass im Crash-Fall die Energieabsorption also der Energieabbau in der Lenksäule 12 weitgehend ausschließlich durch die entsprechend gezielt ausgelegte Energieabsorptionseinheit 17 erfolgt und diese Energieabsorption nicht durch ein Verkanten der beiden Mantelteile 4 und 5 ineinander gestört wird. Hierdurch können bei geringen Verschiebekräften eine hohe Steifigkeit und Eigenfrequenz der Lenkspindellagereinheit erreicht werden. Vor allem aber sind das erfindungsgemäße Verfahren wie auch die erfindungsgemäße Lenkspindellagereinheit 1 so einfach aufgebaut, dass sie kostengünstig realisiert werden können.

**Legende zu den Hinweisziffern:**

| | | | |
|---|---|---|---|
| 1 | Lenkspindellagereinheit | 21 | Nocken-Nockenfolger-Anordnung |
| 2 | Lenkspindel | 22 | Lamellenpaket |
| 3 | Längsachse | 23 | Lamellenpaket |
| 4 | erstes Mantelteil | 24 | Flansch |
| 5 | zweites Mantelteil | 25 | Lenkunterstützungseinheit |
| 6 | Schiebelagerteil | 26 | Schwenkachse |
| 7 | Schiebelagerteil | 27 | Lenkradanschluss |
| 8 | erster Abschnitt | 28 | Längsrichtung |
| 9 | zweiter Abschnitt | 29 | Höhenrichtung |
| 10 | Seitenwand | 30 | Vorspannfeder |
| 11 | Seitenwand | 31 | Drehlager |
| 12 | Lenksäule | 32 | Traglasche |
| 13 | Trageinheit | 33 | Langloch |
| 14 | erstes Trageinheitteil | 34 | Lagerfläche |
| 15 | zweites Trageinheitteil | 35 | Lagerfläche |
| 16 | Befestigungslaschen | 36 | Fixierungsstelle |
| 17 | Energieabsorptionseinheit | 37 | Langloch |
| 18 | Seitenwange | 38 | Feststelleinrichtung |
| 19 | Stellhebel | 39 | Lagerflächen |
| 20 | Spannbolzen | 40 | Richtung |

## Patentansprüche

1. Verfahren zur Herstellung einer Lenkspindellagereinheit (1) zur drehbaren Lagerung einer durch die Lenkspindellagereinheit (1) hindurchgeführten Lenkspindel (2) eines Kraftfahrzeugs um eine Längsachse (3), wobei die Lenkspindellagereinheit (1) ein erstes Mantelteil (4) und zumindest ein zweites Mantelteil (5) aufweist und das zweite Mantelteil (5), in zumindest einem Schiebelager des ersten Mantelteils (4) geführt, entlang der Längsachse (3) verschiebbar im ersten Mantelteil (4) gelagert ist, **dadurch gekennzeichnet, dass** das Schiebelager zumindest zwei Schiebelagerteile (6, 7) aufweist und beim Zusammenbau der Lenkspindellagereinheit (1) in einem ersten Verfahrensschritt das zweite Mantelteil (5) zwischen die Schiebelagerteile (6, 7) eingebracht wird, anschließend in einem zweiten Verfahrensschritt die Schiebelagerteile (6, 7) in einer Relativbewegung aufeinander zu an das zweite Mantelteil (5) angedrückt werden und daran anschließend in einem dritten Verfahrensschritt die Schiebelagerteile (6, 7) in der mit der Relativbewegung erreichten Stellung im ersten Mantelteil (4) fixiert werden.

2. Verfahren nach Anspruch 1, **dadurch gekennzeichnet, dass** während des zweiten Verfahrensschrittes eine Verschiebekraft bestimmt wird, welche benötigt wird, um das zweite Mantelteil (5) entlang der Längsachse (3) im ersten Mantelteil (4) zu verschieben.

3. Verfahren nach Anspruch 1 oder 2, **dadurch gekennzeichnet, dass** während des zweiten Verfahrensschrittes ein Weg bestimmt wird, welcher bei der Relativbewegung der Schiebelagerteile (6, 7) aufeinander zu zurückgelegt wird, und/oder eine Kraft bestimmt wird, mit der zumindest eines der Schiebelagerteile (6, 7) bei der Relativbewegung an das zweite Mantelteil (5) angedrückt wird.

4. Verfahren nach Anspruch 2 oder 3, **dadurch gekennzeichnet, dass** der dritte Verfahrensschritt in derjenigen Stellung durchgeführt wird, bei der die Verschiebekraft und/oder der Weg und/oder die Kraft einen vorgegebenen Wert erreicht hat bzw. haben oder in einem vorgegebenen Wertebereich liegt bzw. liegen.

5. Verfahren nach einem der Ansprüche 1 bis 4, wobei das erste Mantelteil (4) zumindest einen ersten Abschnitt (8) und zumindest einen zweiten Abschnitt (9) aufweist und eines der Schiebelagerteile (6) Bestandteil des ersten Abschnitts (8) ist oder an diesem befestigt oder zumindest abgestützt ist und das zumindest ein anderes der Schiebelagerteile (7) Bestandteil des zweiten Abschnitts (9) ist oder an diesem befestigt oder zumindest abgestützt ist, **dadurch gekennzeichnet, dass** die Abschnitte (8, 9) des ersten Mantelteils (4) im zweiten Verfahrensschritt zum Andrücken der Schiebelagerteile (6, 7) an das zweite Mantelteil (5) in einer Relativbewegung aufeinander zu bewegt werden und die Abschnitte (8, 9) im dritten Verfahrensschritt zur Fixierung der Schiebelagerteile (6, 7) in der mit der Relativbewegung erreichten Stellung aneinander fixiert werden.

6. Lenkspindellagereinheit (1) zur drehbaren Lagerung einer durch die Lenkspindellagereinheit (1) hindurchgeführten Lenkspindel (2) eines Kraftfahrzeugs um eine Längsachse (3), wobei die Lenkspindellagereinheit (1) ein erstes Mantelteil (4) und zumindest ein zweites Mantelteil (5) aufweist und das zweite Mantelteil (5), in zumindest einem Schiebelager des ersten Mantelteils (4) geführt, entlang der Längsachse (3) verschiebbar im ersten Mantelteil (4) gelagert ist, **dadurch gekennzeichnet, dass** das Schiebelager zumindest zwei Schiebelagerteile (6, 7) aufweist, die als starre Körper ausgebildet sind und als massive Körper ohne Hohlräume lediglich die materialbedingte Elastizität aufweisen, und das zweite Mantelteil (5) zwischen den Schiebelagerteilen (6, 7) verschiebbar gelagert ist und die Schiebelagerteile (6, 7) unbeweglich im ersten Mantelteil (4) im Betrieb nicht lösbar oder nachstellbar fixiert sind.

7. Lenkspindellagereinheit (1) nach Anspruch 6, **dadurch gekennzeichnet, dass** das zweite Mantelteil (5) mit einer entlang der Längsachse (3) wirkenden Verschiebekraft mit einem Betrag zwischen 100 Newton und 600 Newton relativ zum ersten Mantelteil (4) verschiebbar ist.

8. Lenkspindellagereinheit (1) nach Anspruch 6 oder 7, **dadurch gekennzeichnet, dass** das erste Mantelteil (4) zumindest einen ersten Abschnitt (8) und zumindest einen zweiten Abschnitt (9) aufweist und eines der Schiebelagerteile (6) Bestandteil des ersten Abschnitts (8) ist oder an diesem befestigt oder zumindest abgestützt ist und das zumindest eine andere der Schiebelagerteile (7) Bestandteil des zweiten Abschnitts (9) ist oder an diesem befestigt oder zumindest abgestützt ist, wobei die Abschnitte (8, 9) zur Fixierung der Schiebelagerteile (6, 7) aneinander fixiert sind.

9. Lenkspindellagereinheit (1) nach Anspruch 8, **dadurch gekennzeichnet, dass** der erste Abschnitt (8) des ersten Mantelteils (4) ein zumindest bereichsweise wannenförmig geformtes Blechteil ist und der zweite Abschnitt (9) des ersten Mantelteils (4) ein zwischen Seitenwänden (10, 11) des ersten Abschnitts (8) fixiertes Deckblech ist.

10. Lenksäule (12) für ein Kraftfahrzeug, wobei die Lenksäule (12) eine Lenkspindellagereinheit (1) nach einem der Ansprüche 6 bis 9 aufweist, **dadurch gekennzeichnet, dass** eine Lenkspindel (2) der Lenksäule (12) durch die Mantelteile (4, 5) hindurchgeführt und um die Längsachse (3) drehbar in der Lenkspindellagereinheit (1) gelagert ist.

## Claims

1. Method for producing a steering shaft bearing unit (1) for the mounting of a steering shaft (2) of a motor vehicle, which steering shaft is led through the steering shaft bearing unit (1), so as to be rotatable about a longitudinal axis (3), wherein the steering shaft bearing unit (1) comprises a first casing part (4) and at least one second casing part (5), and the second casing part (5), guided in at least one slide bearing of the first casing part (4), is mounted in the first casing part (4) so as to be displaceable along the longitudinal axis (3), **characterized in that** the slide bearing comprises at least two slide bearing parts (6, 7) and, during the assembly of the steering shaft bearing unit (1), in a first method step, the second casing part (5) is inserted between the slide bearing parts (6, 7); subsequently, in a second method step, the slide bearing parts (6, 7) are, in a relative movement toward one another, pressed against the second casing part (5); and subsequently, in a third method step, the slide bearing parts (6, 7) are fixed in the first casing part (4) in the position attained by way of the relative movement.

2. Method according to Claim 1, **characterized in that**, during the second method step, a displacement force required for displacing the second casing part (5) along the longitudinal axis (3) in the first casing part (4) is determined.

3. Method according to Claim 1 or 2, **characterized in that**, during the second method step, a distance covered during the relative movement of the slide bearing parts (6, 7) toward one another is determined, and/or a force with which at least one of the slide bearing parts (6, 7) is pressed against the second casing part (5) during the relative movement is determined.

4. Method according to Claim 2 or 3, **characterized in that** the third method step is performed in the position in which the displacement force and/or the travel and/or the force has or have reached a predefined value or lie or lies in a predefined value range.

5. Method according to one of Claims 1 to 4, wherein the first casing part (4) comprises at least one first section (8) and at least one second section (9), and one of the slide bearing parts (6) is a constituent part of the first section (8) or is fastened to or at least supported on said first section, and the at least one other of the slide bearing parts (7) is a constituent part of the second section (9) or is fastened to or at least supported on said second section, **characterized in that**, in the second method step, the sections (8, 9) of the first casing part (4) are moved toward one another in a relative movement in order to press the slide bearing parts (6, 7) against the second casing part (5), and in the third method step, the sections (8, 9) are fixed to one another in order to fix the slide bearing parts (6, 7) in the position attained by way of the relative movement.

6. Steering shaft bearing unit (1) for the mounting of a steering shaft (2) of a motor vehicle, which steering shaft is led through the steering shaft bearing unit (1), so as to be rotatable about a longitudinal axis (3), wherein the steering shaft bearing unit (1) comprises a first casing part (4) and at least one second casing part (5), and the second casing part (5), guided in at least one slide bearing of the first casing part (4), is mounted in the first casing part (4) so as to be displaceable along the longitudinal axis (3), **characterized in that** the slide bearing comprises at least two slide bearing parts (6, 7) which are in the form of rigid bodies and, as solid bodies without cavities, display only material-induced elasticity, and the second casing part (5) is mounted displaceably between the slide bearing parts (6, 7), and the slide bearing parts (6, 7) are fixed in the first casing part (4) so as to be immovable and not releasable or re-adjustable during operation.

7. Steering shaft bearing unit (1) according to Claim 6, **characterized in that** the second casing part (5) can be displaced relative to the first casing part (4) by a displacement force, acting along the longitudinal axis (3), with a magnitude of between 100 newtons and 600 newtons.

8. Steering shaft bearing unit (1) according to Claim 6 or 7, **characterized in that** the first casing part (4) comprises at least one first section (8) and at least one second section (9), and one of the slide bearing parts (6) is a constituent part of the first section (8) or is fastened to or at least supported on said first section, and the at least one other of the slide bearing parts (7) is a constituent part of the second section (9) or is fastened to or at least supported on said second section, wherein the sections (8, 9) are fixed to one another in order to fix the slide bearing parts (6, 7).

9. Steering shaft bearing unit (1) according to Claim 8, **characterized in that** the first section (8) of the first casing part (4) is a sheet-metal part which is at least regionally of trough-shaped form, and the second section (9) of the first casing part (4) is a sheet-metal cover part which is fixed between side walls (10, 11) of the first section (8).

10. Steering column (12) for a motor vehicle, wherein the steering column (12) comprises a steering shaft bearing unit (1) according to one of Claims 6 to 9, **characterized in that** a steering shaft (2) of the steering column (12) is led through the casing parts (4, 5) and is mounted in the steering shaft bearing unit (1) so as to be rotatable about the longitudinal axis (3).

## Revendications

1. Procédé de fabrication d'une unité de palier d'arbre de direction (1) pour le montage rotatif d'un arbre de direction (2), guidé à travers l'unité de palier d'arbre de direction (1), d'un véhicule automobile autour d'un axe longitudinal (3), dans lequel l'unité de palier d'arbre de direction (1) comprend une première partie d'enveloppe (4) et au moins une deuxième partie d'enveloppe (5), et la deuxième partie d'enveloppe (5) est montée de manière mobile dans la première partie d'enveloppe (4) le long de l'axe longitudinal (3) de manière guidée dans au moins un palier coulissant de la première partie d'enveloppe (4), **caractérisé en ce que** le palier coulissant comprend au moins deux parties de palier coulissant (6, 7) et, lors de l'assemblage de l'unité de palier d'arbre de direction (1), dans une première étape de procédé, la deuxième partie d'enveloppe (5) est introduite entre les parties de palier coulissant (6, 7), puis, dans une deuxième étape de procédé, les parties de palier coulissant (6, 7) sont pressées contre la deuxième partie d'enveloppe (5) dans un mouvement relatif l'une vers l'autre et ensuite, dans une troisième étape de procédé, les parties de palier coulissant (6, 7) sont fixées dans la première partie d'enveloppe (4) dans la position obtenue par le mouvement relatif.

2. Procédé selon la revendication 1, **caractérisé en ce que**, pendant la deuxième étape de procédé, une force de déplacement est déterminée, laquelle est nécessaire pour déplacer la deuxième partie d'enveloppe (5) dans la première partie d'enveloppe (4) le long de l'axe longitudinal (3).

3. Procédé selon la revendication 1 ou 2, **caractérisé en ce que**, pendant la deuxième étape de procédé, une course est déterminée, laquelle est parcourue lors du mouvement relatif des parties de palier coulissant (6, 7) l'une vers l'autre, et/ou une force est déterminée, à l'aide de laquelle au moins l'une des parties de palier coulissant (6, 7) est pressée contre la deuxième partie d'enveloppe (5) lors du mouvement relatif.

4. Procédé selon la revendication 2 ou 3, **caractérisé en ce que** la troisième étape de procédé est effectuée dans la position à laquelle la force de déplacement et/ou la course et/ou la force a ou ont atteint une valeur prédéfinie ou se situe(nt) dans une plage de valeurs prédéfinie.

5. Procédé selon l'une des revendications 1 à 4, dans lequel la première partie d'enveloppe (4) comprend au moins une première section (8) et au moins une deuxième section (9), et l'une des parties de palier coulissant (6) fait partie de la première section (8) ou est fixée à celle-ci ou est au moins supportée sur celle-ci et l'au moins une autre des parties de palier coulissant (7) fait partie de la deuxième section (9) ou est fixée à celle-ci ou est au moins supportée sur celle-ci, **caractérisé en ce que** les sections (8, 9) de la première partie d'enveloppe (4) sont déplacées suivant un mouvement relatif l'une vers l'autre dans la deuxième étape de procédé pour presser les parties de palier coulissant (6, 7) contre la deuxième partie d'enveloppe (5), et les sections (8, 9) sont, dans la troisième étape de procédé, fixées l'une à l'autre dans la position obtenue par le mouvement relatif pour la fixation des parties de palier coulissant (6, 7).

6. Unité de palier d'arbre de direction (1) pour le montage rotatif d'un arbre de direction (2), guidé à travers l'unité de palier d'arbre de direction (1), d'un véhicule automobile autour d'un axe longitudinal (3), dans lequel l'unité de palier d'arbre de direction (1) comprend une première partie d'enveloppe (4) et au moins une deuxième partie d'enveloppe (5), et la deuxième partie d'enveloppe (5) est montée de manière mobile dans la première partie d'enveloppe (4) le long de l'axe longitudinal (3) de manière guidée dans au moins un palier coulissant de la première partie d'enveloppe (4), **caractérisée en ce que** le palier coulissant comprend au moins deux parties de palier coulissant (6, 7) qui sont réalisées sous forme de corps rigides et, sous forme de corps pleins sans cavités, présentent seulement l'élasticité due au matériau, et la deuxième partie d'enveloppe (5) est montée mobile entre les parties de palier coulissant (6, 7) et les parties de palier coulissant (6, 7) sont fixées de manière non mobile dans la première partie d'enveloppe (4) de manière non amovible ou de manière réajustable lors du fonctionnement.

7. Unité de palier d'arbre de direction (1) selon la revendication 6, **caractérisée en ce que** la deuxième partie d'enveloppe (5) est mobile par rapport à la première partie d'enveloppe (4) à l'aide d'une force de déplacement agissant le long de l'axe longitudinal (3) et présentant une amplitude comprise entre 100 Newton et 600 Newton.

8. Unité de palier d'arbre de direction (1) selon la revendication 6 ou 7, **caractérisée en ce que** la première partie d'enveloppe (4) comprend au moins une première section (8) et au moins une deuxième section (9), et l'une des parties de palier coulissant (6) fait partie de la première section (8) ou est fixée à celle-ci ou est au moins supportée sur celle-ci et l'au moins une autre des parties de palier coulissant (7) fait partie de la deuxième section (9) ou est fixée à celle-ci ou est au moins supportée sur celle-ci, les sections (8, 9) étant fixées l'une à l'autre pour la fixation des parties de palier coulissant (6, 7).

9. Unité de palier d'arbre de direction (1) selon la revendication 8, **caractérisée en ce que** la première section (8) de la première partie d'enveloppe (4) est une pièce en tôle formée au moins dans certaines régions en forme de bac et la deuxième section (9) de la première partie d'enveloppe (4) est une tôle de recouvrement fixée entre des parois latérales (10, 11) de la première section (8).

10. Colonne de direction (12) pour un véhicule automobile, la colonne de direction (12) comprenant une unité de palier d'arbre de direction (1) selon l'une des revendications 6 à 9, **caractérisée en ce qu'**un arbre de direction (2) de la colonne de direction (12) est guidé à travers les parties d'enveloppe (4, 5) et est monté rotatif autour de l'axe longitudinal (3) dans l'unité de palier d'arbre de direction (1).
